Europäisches Patentamt

European Patent Office

Office européen des brevets

(11) Veröffentlichungsnummer: **0 134 903**
**B1**

(12) **EUROPÄISCHE PATENTSCHRIFT**

(45) Veröffentlichungstag der Patentschrift:
11.10.89

(21) Anmeldenummer: 84105998.3

(22) Anmeldetag: 25.05.84

(51) Int. Cl.⁴: **B 61 L 11/08**

(54) Koderückstellvorrichtung an einer Förderanlage und Verwendung der Koderückstellvorrichtung.

(30) Priorität: 06.06.83 CH 3094/83

(43) Veröffentlichungstag der Anmeldung:
27.03.85 Patentblatt 85/13

(45) Bekanntmachung des Hinweises auf die Patenterteilung: 11.10.89 Patentblatt 89/41

(84) Benannte Vertragsstaaten:
AT BE CH DE FR GB IT LI NL SE

(56) Entgegenhaltungen:
CH–A– 496 603
DE–A– 1 406 777
DE–A– 3 044 005
FR–A– 1 389 245
GB–A– 584 274
GB–A– 2 084 775
US–A– 3 834 315
US–A– 4 056 063
US–A– 4 068 597

(73) Patentinhaber: Büro Patent AG
Spielhof 3
CH-8750 Glarus (CH)

(72) Erfinder: Pforte, Karl Wilfried
Lipperheidestrasse 1A
D-8000 München 60 (DE)

(74) Vertreter: Schmauder, Klaus Dieter et al
c/o Schmauder & Wann Patentanwaltsbüro Nidelbadstrasse 75
CH-8038 Zürich (CH)

## Beschreibung

Die Erfindung betrifft eine Vorrichtung gemäss Oberbegriff des Anspruch 1 sowie ihre Verwendung gemäss Oberbegriff des Anspruch 8.

Aus der US-PS 3 636 883 ist eine Förderanlage bekannt, die Weichen enthält, welche mit einem Zufahrts-, Abfahrts- und Anschlussschienenstrang versehen sind. Die Weichen enthalten eine Steuervorrichtung und sind mit Kodelesevorrichtungen ausgestattet, um einen an einem Förderwagen gesetzten Kode zu lesen und die Weiche in Abhängigkeit vom eingestellten Kode des Förderwagens zu betätigen. Der Kode wird an einer Seitenwand des Förderwagens mittels Stellmarken eingestellt, die in Fahrtrichtung des Förderwagens in verschiedene Positionen stellbar sind. Der Anschlussschienenstrang kann als Empfangsstation ausgestaltet sein, auf der ankommende Förderwagen anhalten. Ist ein solcher Anschlussschienenstrang besetzt, so wird über eine Besetztmeldevorrichtung der Weiche angezeigt, dass kein Förderwagen mehr aufgenommen werden kann. Die Förderwagen können die Weiche nicht mehr betätigen und fahren in der Förderanlage weiter. Sie kreisen dabei so oft, bis die entsprechende Empfangsstation frei ist und einen neuen Förderwagen aufnehmen kann. Dies führt zu einer unnötigen Belastung der gesamten Förderanlage und des Förderwagens.

Eine Vorrichtung gemäß dem Oberbegriff des Anspruchs 1 ist aus der GB-A-2 084 775 bekannt.

Aufgabe der Erfindung ist es, eine Vorrichtung zu schaffen, die eine selbsttätige Rückstellung des an einem Förderwagen eingestellten Kodes ermöglicht, sich durch besonders einfachen Aufbau auszeichnet und an einer Weiche einer Förderanlage verwendet werden kann.

Diese Aufgabe wird erfindungsgemäss durch die Merkmale des Anspruches 1 und die Merkmale des Anspruches 8 gelöst.

Dadurch, dass die Vorrichtung einen Mitnehmeranschlag aufweist, der zwar mittels einer Stellvorrichtung in den Verschiebeweg einer Stellmarke ausfahrbar ist, der aber beim Erreichen der Endstellung der Stellmarke nicht wie bei der GB-A-2 084 775 zurückgenommen werden muss, sondern die Stellmarke überfahren kann, ergibt sich eine ausserordentlich einfache Koderückstellvorrichtung, die einen sehr grossen Anwendungsbereich ermöglicht.

Weist ein Förderwagen beispielsweise zwei hintereinander angeordnete Stellmarken auf, die jeweils unabhängig voneinander in verschiedene Positionen gebracht werden können, so genügt ein Mitnehmeranschlag, der bei der Vorbeifahrt des Förderwagens selbsttätig nacheinander die Stellmarken in Ausgangsstellung bringt. Weist der Förderwagen hingegen mindestens zwei in Fahrtrichtung übereinander angeordnete Stellmarken auf, so kann es beispielsweise genügen, wenn die Vorrichtung nur einen Mitnehmeranschlag aufweist, um eine der beiden Stellmarken in Ausgangsstellung zu bringen, wenn dies ausreicht, um dem Förderwagen einen neuen, bestimmten Hilfskode zu geben. Zweckmässigerweise ist die Vorrichtung jedoch nach Anspruch 2 ausgebildet.

Der Angriff des Mitnehmeranschlages lässt sich durch die Ausgestaltung nach Anspruch 3 verbessern.

Eine besonders einfache Ausgestaltung des Mitnehmeranschlages ergibt sich aus Anspruch 4. Dabei kann der Mitnehmeranschlag beispielsweise eine senkrecht in den Verschiebeweg der Stellmarke ragende Blattfeder sein, die an einem vorbeifahrenden Förderwagen zunächst die Stellmarke mitnimmt und bei Erreichen des Endanschlages in Fahrtrichtung sowie vom Förderwagenweg zurückgebogen wird, wodurch die Stellmarke überfahren werden kann. Zweckmässigerweise ist die Vorrichtung nach Anspruch 5 ausgestaltet. Dies ermöglicht eine bessere und genauere Führung des Mitnehmeranschlages.

Je nach Verwendungszweck kann der Mitnehmeranschlag entweder dauernd ausgefahren sein und nur bei Bedarf mittels der Stellvorrichtung aus dieser Arbeitsstellung eingefahren werden. Vorzugsweise ist die Grundstellung des Mitnehmeranschlages jedoch die eingefahrene, inaktive Stellung, aus der er mittels der Stellvorrichtung bei Bedarf ausgefahren wird.

Die Stellvorrichtung der Vorrichtung kann beliebig ausgestaltet sein. So kann sie beispielsweise durch einen mechanischen Hebel gebildet werden, der vom Förderwagen selbst betätigt wird und über eine Schaltkupplung mit dem Mitnehmeranschlag verbunden ist. Auch ein elektromotorischer Antrieb über eine Rutschkupplung wäre denkbar. Besonders vorteilhaft und einfach ist jedoch eine Ausgestaltung nach Anspruch 6. Es kann für jeden Mitnehmeranschlag eine gesonderte Stellvorrichtung vorgesehen sein. Vorteilhaft ist jedoch auch eine Ausbildung nach Anspruch 7.

Für die Vorrichtung ergeben sich verschiedene Verwendungsmöglichkeiten. So kann sie beispielsweise an einer Sammelstelle angeordnet werden, an die nicht benötigte Förderwagen zurückkehren, um dort den eingestellten Kode zu löschen. Besonders vorteilhaft ist jedoch die erfindungsgemässe Verwendung der Vorrichtung gemäss Anspruch 8. Dadurch wird erreicht, dass ein Förderwagen, welcher trotz zutreffendem Kode eine Weiche nicht schalten kann, weil diese beispielsweise besetzt oder ausgeschaltet ist, nicht weiterhin in der Förderanlage umherirrt, bis die entsprechende Weiche wieder betätigbar ist, sondern aufgrund des zurückgestellten Kodes an eine Sammelstelle geführt werden kann. An einer solchen Sammelstelle kann dann der Ursache nachgegangen werden, warum der Förderwagen seine Bestimmungsstation nicht erreicht hat.

Eine besonders vorteilhafte Verwendung umschreiben die Ansprüche 9 und 10.

Ausführungsbeispiele des Gegenstandes der Erfindung sind nachfolgend anhand von Zeichnungen näher beschrieben, dabei zeigen :

Figur 1 eine Koderückstellvorrichtung an einer Weiche einer Förderanlage, in Seitenansicht ;

Figur 2 die Koderückstellvorrichtung an einer Weiche einer Förderanlage gemäss Figur 1 in Draufsicht ;

Figur 3 die Koderückstellvorrichtung im Zusammenwirken mit einem Förderwagen im Grundriss und in grösserem Massstab ;

Figur 4 die Koderückstellvorrichtung gemäss Figur 3 im Schnitt IV-IV ;

Figur 5 die Koderückstellvorrichtung im Schnitt V-V der Figur 3 ;

Figur 6 eine weitere Koderückstellvorrichtung in Darstellung analog Figur 3 ; und

Figur 7 ein schematisches Schaltschema der Koderückstellvorrichtung in Verbindung mit einer Weiche und einem Anschlussschienenstrang.

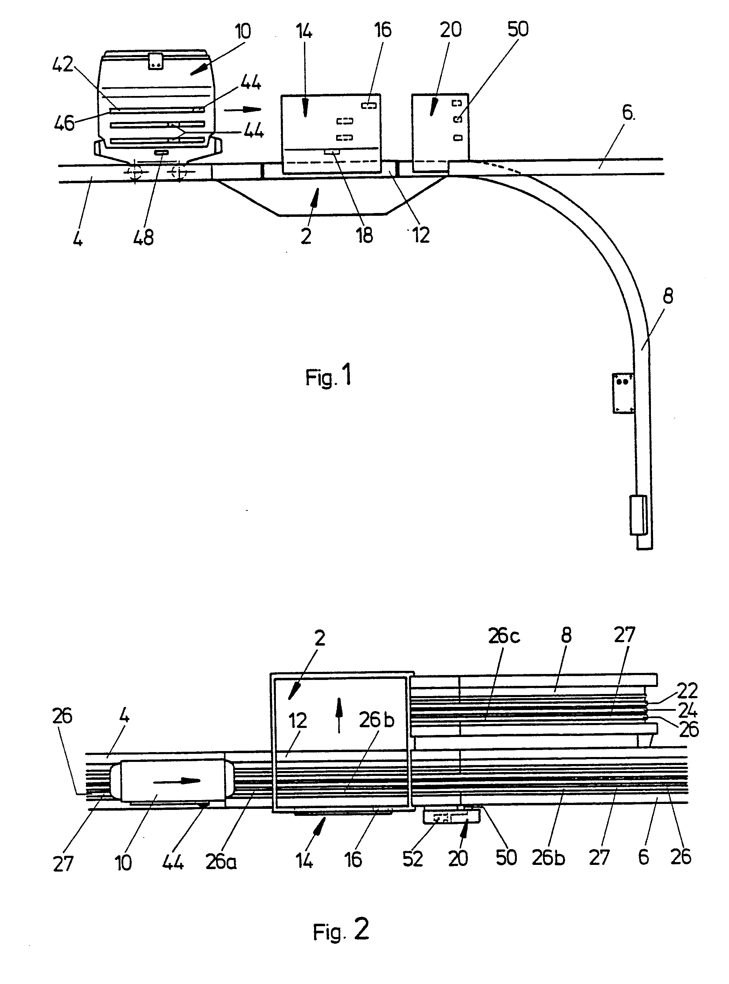

Die Figuren 1 und 2 zeigen einen Ausschnitt einer Förderanlage mit einer Weiche 2, an der ein Zufahrtsschienenstrang 4, ein Abfahrtsschienenstrang 6 und ein Anschlussschienenstrang 8 angeordnet sind. Der Anschlussschienenstrang 8 ist als Empfangsstation zur Aufnahme einer bestimmten Anzahl von Förderwagen 10 ausgebildet. Die Weiche 2 enthält einen Weichenwagen 12, der in einer Stellung eine durchgehende Verbindung zwischen dem Zufahrtsschienenstrang 4 und dem Abfahrtsschienenstrang 6 herstellt und zum Ueberführen eines Förderwagens 10 auf den Anschlussschienenstrang 8 dient. Die Weiche 2 enthält eine Kodelesevorrichtung 14, die am Weichenwagen 12 angeordnet ist und zum Lesen eines am Förderwagen 10 eingestellten Kodes dient. Hierzu weist die Kodelesevorrichtung 14 Empfangselemente 16, z. B. einen Schutzgaskontakt, auf, die in Form des zu lesenden Kodes gesetzt sind. Ein weiteres Empfangselement 18 dient zum Lesen einer Fixmarke am Förderwagen und bestimmt die Relativlage zwischen Förderwagen und Kodelesevorrichtung, an der der Kode gelesen werden muss. Am Abfahrtsschienenstrang 6 ist eine der Kodelesevorrichtung 14 nachgeschaltete Koderückstellvorrichtung 20 angeordnet. Die Förderanlage ist ferner mit Stromschienen 22, 24 ausgestattet, sowie mit einer Steuerschiene 26, welche Steuerbefehle an den Förderwagen 10 überträgt bzw. von diesem empfängt. Diese Steuerschiene 26 ist in verschiedene elektrisch voneinander getrennte Steuerschienenabschnitte unterteilt, von denen beispielsweise die Steuerschienenabschnitte 26a, 26b, 26 c am Zufahrtsschienenstrang 4, auf dem Weichenwagen 12 und Abfahrtsschienenstrang 6 sowie am Anschlussschienenstrang 8 gezeigt sind.

In der Förderanlage zirkulieren die selbstfahrenden Förderwagen 10, die ein Fahrgestell 28 mit einem Antriebsmotor 30 und Räder 32 aufweisen. Schleifbügel 34 wirken mit den Stromschienen 22, 24 zusammen und ein Schleifbügel 36 mit der Steuerschiene 26. Die Schleifbügel 34 sind jeweils mittels Ueberbrückungen 38, in denen Dioden 40 angeordnet sind, mit dem Schleifbügel 36 verbunden. Die Dioden bewirken, dass am Schleifbügel 36 nur Strom eines bestimmten Potentials, z. B. des Pluspotentials anliegt, um Steuerfunktionen in angeschlossenen Vorrichtungen zu bewirken. An einer Seite des Förderwagens 10 sind in übereinanderliegenden Führungen 42 Stellmarken 44 angeordnet, die jeweils von einem Endanschlag 46 in den Führungen in Fahrtrichtung des Förderwagens gesehen in verschiedene Positionen gebracht werden können, in denen sie bestimmte Kode bilden, die dann von den Empfangselementen 16 der Kodelesevorrichtung 14 gelesen werden können. Eine Fixmarke 48 ist fest am Förderwagen 10 angeordnet und dient zur Markierung der St?ll Förderwagens bezüglich der Kodelesevorrichtung 14, in der der Kode gelesen werden darf. Hierzu wirkt die Fixmarke 48 mit dem Empfangselement 18 der Kodelesevorrichtung 14 zusammen. Die Stellmarken 44 und die Fixmarke 48 werden beispielsweise durch Permanentmagnete gebildet.

Die Koderückstellvorrichtung 20 weist im vorliegenden Beispiel drei übereinander angeordnete Mitnehmeranschläge 50 auf, die mittels einer Stellvorrichtung 52 in den Verschiebeweg der Stellmarken 44 aus- und einfahrbar sind.

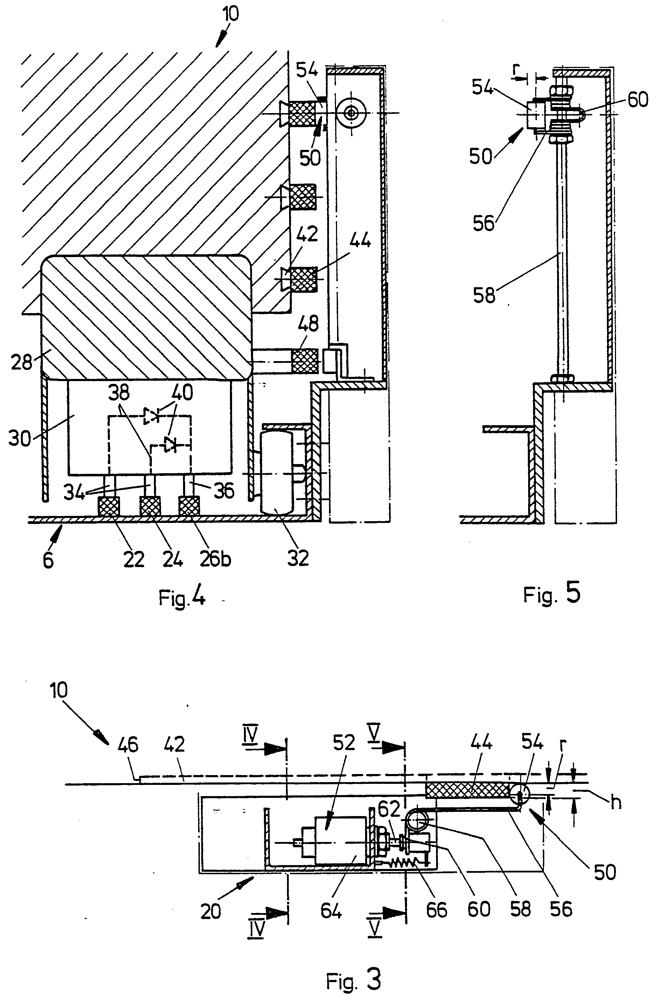

In der in den Figuren 3 bis 5 gezeigten Stellung sind die Mitnehmeranschläge 50 ausgefahren und wirken mit den Stellmarken 44 zusammen, wenn der Förderwagen an der Koderückstellvorrichtung vorbeifährt. Sobald die Stellmarken 44 an den Endanschlägen 46 der Führungen 42 anstehen, werden die Mitnehmeranschläge 50 entgegen einer Vorspannkraft zurückgedrängt, die grösser ist als der Verschiebewiderstand der Stellmarken 44 jedoch kleiner als die Antriebskraft des Förderwagens, worauf die Mitnehmeranschläge 50 die Stellmarken 44 überfahren können.

Im gezeigten Beispiel weist jeder Mitnehmeranschlag 50 eine Laufrolle 54 auf, deren Radius r kleiner ist als die Höhe h der Stellmarke 44. Der Mitnehmeranschlag 50 ist an einem Hebel 56 angeformt, der aus einem Draht, vorzugsweise Federstahldraht, gebildet ist und an einer Achse 58 verschwenkbar gelagert ist. Der Hebel 56 ist mit einem Betätigungswinkel 60 versehen, an dem der Anker 62 eines Elektromagneten 64 angreift, der als Stellvorrichtung 52 vorgesehen ist. Eine Rückholfeder 66 dient zum Einfahren des Mitnehmeranschlages 50, wenn der Elektromagnet 64 stromlos ist. Für jede der in den Figuren 4 und 5 dargestellten Stellmarken 44 ist ein solcher Mitnehmeranschlag 50 mit Stellvorrichtung 52 vorhanden, obwohl nur ein Mitnehmeranschlag 50 und eine Stellvorrichtung 52 gezeigt sind. Es ist auch möglich, für die drei Mitnehmeranschläge 50 eine gemeinsame Stellvorrichtung 52 vorzusehen, wobei dann die Hebel 56 jeweils starr mit der Achse 58 zu verbinden wären, zu deren Verschwenken dann eine einzige Stellvorrichtung 52 dienen kann.

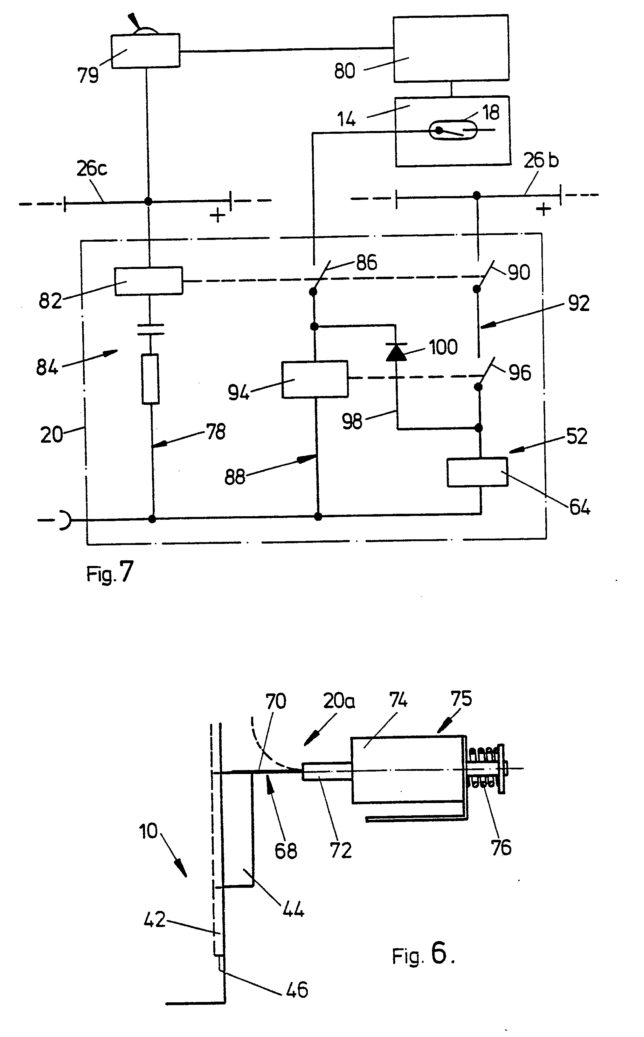

Die Figur 6 zeigt ein weiteres Ausführungsbeispiel einer Koderückstellvorrichtung 20a, die als Mitnehmeranschlag 68 eine Blattfeder 70 aufweist, die am Anker 72 eines Elektromagneten 74 angeordnet ist, der als Stellvorrichtung 75 dient.

Eine Rückholfeder 76 dient zum Einfahren des Mitnehmeranschlages 68 aus der in Figur 6 gezeigten ausgefahrenen Stellung, in der der Elektromagnet 74 aktiviert ist. Sobald die Stellmarke 44 den Endanschlag 46 erreicht hat, schwenkt die Blattfeder 70 in Fahrtrichtung und quer zur Fahrtrichtung aus, wie dies in Figur 6 gestrichelt angedeutet ist. In dieser Stellung kann die Blattfeder 70 die Stellmarke 44 überfahren. Auch in diesem Ausführungsbeispiel ist es möglich, den Mitnehmeranschlag mit einer Laufrolle zu versehen.

Die Figur 7 zeigt ein Schaltschema der an einer Weiche 2 angeschlossenen Koderückstellvorrichtung 20. Anhand dieses Schaltschemas wird die Funktionsweise der Koderückstellvorrichtung an der Weiche 2 wie folgt beschrieben.

Die Koderückstellvorrichtung 20 weist einen ersten Stromkreis 78 auf, der mit dem Steuerschienenabschnitt 26c verbunden ist, welcher als Besetztmeldevorrichtung dient und am Anschlusschienenstrang 8 angeordnet ist. Der Stromkreis 78 ist ferner mit einer Ausschaltvorrichtung 79 für den Anschlussschienenstrang 8 und damit auch für die Steuervorrichtung 80 der Weiche 2 verbunden. Ist der Anschlussschienenstrang 8 voll besetzt, so befindet sich ein Förderwagen 10 im Bereich des Steuerschienenabschnittes 26c und legt über seinen Schleifbügel 36 ein positives Potential an den Steuerschienenabschnitt 26c, wodurch der erste Stromkreis 78 aktiviert wird. Dieser enthält ein erstes Relais 82 und ein Zeitglied 84, mit dessen Hilfe die Ansprechzeit des ersten Relais 82 eingestellt werden kann. Das erste Relais 82 schliesst im aktivierten Zustand einen ersten Schalter 86 in einem zweiten Stromkreis 88 und einen zweiten Schalter 90 in einem dritten Stromkreis 92. Der zweite Stromkreis 88 ist mit der Kodeleseeinrichtung 14 derart verbunden, dass er vom Empfangselement 18 aktiviert wird, wenn dieses von der Fixmarke 48 des Förderwagens 10 geschlossen wird. Im zweiten Stromkreis 88 liegt ein zweites Relais 94, welches im aktivierten Zustand einen dritten Schalter 96 schliesst, der dem zweiten Schalter 90 im dritten Stromkreis 92 nachgeschaltet ist. Der dritte Stromkreis 92 ist mit dem als Besetztmeldevorrichtung dienenden Steuerschienenabschnitt 26b verbunden, der im Bereich der Weiche 2 vor der Kodelesevorrichtung 14 und im Abfahrtsschienenstrang 6 im Bereich der Koderückstellvorrichtung 20 angeordnet ist. Der dritte Stromkreis 92 enthält überdies den Elektromagneten 64 der Stellvorrichtung 52. Sind die ersten beiden Stromkreise 78 und 88 durch einen auf dem Anschlussschienenstrang 8 im Bereich des Steuerschienenabschnittes 26c und vor der Kodelesevorrichtung 14 stehenden Förderwagen aktiviert, so sind der zweite Schalter 90 und der dritte Schalter 96 des dritten Stromkreises 92 geschlossen und es fliesst ein Strom, da der sich auf dem Steuerschienenabschnitt 26b befindende Förderwagen über seinen Schleifbügel 36 ein positives Potential an den Steuerschienenabschnitt 26b abgibt. Dadurch werden die Elektromagnete 64 der Stellvorrichtung 52 aktiviert und damit die Mitnehmeranschläge 50 ausgefahren. Eine Querverbindung 98, die nach dem dritten Schalter 96 im dritten Stromkreis 92 angeschlossen ist und vor dem zweiten Relais 94 im zweiten Stromkreis 88 mündet und überdies eine Diode 100 enthält, bewirkt einen Haltestrom für das zweite Relais 94 selbst dann, wenn das Empfangselement 18 der Kodelesevorrichtung 14 durch die Weiterfahrt des Förderwagens wieder geöffnet ist. Solange sich der Förderwagen im Weichenbereich und im Bereich der Koderückstellvorrichtung 20 befindet, bleiben der Steuerschienenabschnitt 26b und der dritte Stromkreis 92 aktiviert und damit auch die Mitnehmeranschläge 50 ausgefahren, so dass die Stellmarken 44 an die Endanschläge 46 zurückgestellt werden können, wenn der Förderwagen an der Koderückstellvorrichtung 20 vorbeifährt. Verlässt der Förderwagen den Steuerschienenabschnitt 26b, so fällt das zweite Relais 94 ab und damit werden auch die Elektromagnete 64 der Koderückstellvorrichtung 20 stromlos und die Mitnehmeranschläge 50 werden eingefahren.

Wird aus dem Anschlussschienenstrang 8 ein Förderwagen entfernt und damit der Steuerschienenabschnitt 26c stromlos, so entfällt das Besetztsignal und das erste Relais 82 geht in Ruhelage. Damit werden die Stromkreise getrennt und ein weiterer Förderwagen kann an der Weiche 2 wieder ausgeschleust werden.

Bezugszeichenliste

    r Radius von 54
    h Höhe von 44
    2 Weiche
    4 Zufahrtsschienenstrang
    6 Abfahrtsschienenstrang
    8 Anschlussschienenstrang
    10 Förderwagen
    12 Weichenwagen
    14 Kodelesevorrichtung
    16 Empfangselement
    18 Empfangselement
    20 Koderückstellvorrichtung
    20a Koderückstellvorrichtung
    22 Stromschiene
    24 Stromschiene
    26 Steuerschiene
    26a Steuerschienenabschnitt an 4
    26b Steuerschienenabschnitt an 12 und 6
    26c Steuerschienenabschnitt an 8
    27 Isolierglied
    28 Fahrgestell
    30 Antriebsmotor
    32 Rad
    34 Schleifbügel
    36 Schleifbügel
    38 Ueberbrückung
    40 Diode
    42 Führung
    44 Stellmarke
    46 Endanschlag
    48 Fixmarke

50 Mitnehmeranschlag
52 Stellvorrichtung
54 Laufrolle
56 Hebel
58 Achse
60 Betätigungswinkel
62 Anker
64 Elektromagnet
66 Rückholfeder
68 Mitnehmeranschlag
70 Blattfeder
72 Anker
74 Elektromagnet
75 Stellvorrichtung
76 Rückholfeder
78 erster Stromkreis
79 Ausschaltvorrichtung
80 Weichen-Steuervorrichtung
82 erstes Relais
84 Zeitglied
86 erster Schalter
88 zweiter Stromkreis
90 zweiter Schalter
92 dritter Stromkreis
94 zweites Relais
96 dritter Schalter
98 Querverbindung
100 Diode

## Patentansprüche

1. Vorrichtung zum Rückstellen mindestens einer an auf einer Bahn einer Förderanlage fahrenden Förderwagen (10), angeordneten Stellmarke (44) in ihre Endstellung wobei die Stellmarke (44) in Fahrtrichtung in mehrere als Kode dienende Positionen verschiebbar ist, mit mindestens einem mit einer ausfahrbaren Stellvorrichtung (52, 75) verbundenen, im ausgefahrenen Zustand im Verschiebeweg der Stellmarke (44) wirksamen Mitnehmeranschlag (50, 68), dadurch gekennzeichnet, daß jeder Mitnehmeranschlag (50, 68) in seiner ausgefahrenen Stellung entweder quer zur oder quer zur und in Fahrtrichtung entgegen einer Vorspannkraft zurückdrängbar ist, die grösser ist als der Verschiebewiderstand der Stellmarke jedoch kleiner als die Antriebskraft des Förderwagens (10).

2. Vorrichtung nach Anspruch 1, wobei der Förderwagen mindestens zwei in Fahrtrichtung übereinander angeordnete Stellmarken aufweist, dadurch gekennzeichnet, dass sie für jede Stellmarke (44) einen Mitnehmeranschlag (50) aufweist.

3. Vorrichtung nach Anspruch 1, dadurch gekennzeichnet, dass am Mitnehmeranschlag (50) eine Laufrolle (54) angeordnet ist, deren Radius (r) kleiner ist als die Höhe (h) der Stellmarke (44).

4. Vorrichtung nach Anspruch 1, dadurch gekennzeichnet, dass der Mitnehmeranschlag (68) als Feder (70) ausgebildet ist.

5. Vorrichtung nach Anspruch 1, dadurch gekennzeichnet, dass der Mitnehmeranschlag (50) an einer federnden Halterung (56, 58) angeordnet ist, die vorzugsweise in Fahrtrichtung weist.

6. Vorrichtung nach Anspruch 1, dadurch gekennzeichnet, dass die Stellvorrichtung (52, 75) einen Elektromagneten (64, 74) aufweist, der in Einfahrstellung des Mitnehmeranschlages (50, 68) inaktiv ist.

7. Vorrichtung nach Anspruch 1, dadurch gekennzeichnet, dass sie eine für alle Mitnehmeranschläge (50) gemeinsame Stellvorrichtung (52) aufweist.

8. Verwendung der Vorrichtung nach Anspruch 1 an einer Förderanlage mit mindestens einer Weiche (2) mit einem Zufahrts-(4), Abfahrts-(6), und Anschlussschienenstrang (8), wobei die Weiche (2) eine mit ihrer Steuervorrichtung (80) verbundene Kodelesevorrichtung (14) für den Kode am Förderwagen (10) aufweist, welche Steuervorrichtung (80) in Abhängigkeit vom eingestellten Kode das Ueberführen des Förderwagens auf den Anschlussschienenstrang (8) auslöst, jedoch bei besetztem oder ausgeschaltetem Anschlussschienenstrang (8) verhindert, dadurch gekennzeichnet, dass die Vorrichtung (20, 20a) der Kodelesevorrichtung (14) nachgeschaltet und mit der Weichen-Steuervorrichtung (80) sowie einer Besetztmeldevorrichtung (26c) und/oder einer Ausschaltvorrichtung (79) des Anschlussschienenstranges (8) verbunden ist, derart, dass ein Besetztmeldesignal der Besetztmeldevorrichtung (26c) oder ein Ausschaltsignal der Ausschaltvorrichtung (79) die Kodelesevorrichtung (14) und/oder die Weichen-Steuervorrichtung (80) ausschaltet und die Vorrichtung (20, 20a) einschaltet.

9. Verwendung nach Anspruch 8, dadurch gekennzeichnet, dass die Vorrichtung (20) einen ersten Stromkreis (78) mit einem ersten Relais (82) aufweist, der mit der Besetztmeldevorrichtung (26c) am Anschlussschienenstrang (8) und/oder der Ausschaltvorrichtung (79) verbunden ist und von einem Besetztsignal aktiviert wird, wobei das erste Relais (82) einen ersten Schalter (86) aufweist, der einen zweiten Stromkreis (88) steuert, welcher mit der Kodelesevorrichtung (14) verbunden ist und ein zweites Relais (94) steuert, wobei das erste Relais (82) weiter einen zweiten Schalter (90) und das zweite Relais (94) einen dritten Schalter (96) aufweist, die einen dritten Stromkreis (92) steuern, welcher mit der Besetztmeldevorrichtung (26b) der Bereiche der Weiche (2) und der Koderückstellvorrichtung (20) verbunden ist und die Stellvorrichtung (52) für den Mitnehmeranschlag (50) aufweist, wobei ferner nach dem dritten Schalter (96) und vor dem zweiten Relais (94) eine Querverbindung (98) zwischen dem zweiten und dritten Stromkreis (88, 92) vorhanden ist.

10. Verwendung nach Anspruch 9, dadurch gekennzeichnet, dass die Vorrichtung (20) im ersten Stromkreis ein die Ansprechzeit des ersten Relais (82) regelndes Zeitglied (84) aufweist.

## Claims

1. Apparatus for resetting at least one marker (44) into its end position, said marker (44) being arranged on a conveyor truck (10) travelling along a track of a conveying system, said marker (44) being movable, in the direction of travel, into a plurality of positions which serve as codes, said apparatus having at least one engaging abutment (50, 68) which is connected to a withdrawable positioning device (52, 75) and which in it pulled-out state, is effective in the path of movement of the marker (44), characterised in that each engaging abutment (50, 68) in its pulled-out position can be forced back either transversely or transversely and in the direction of travel counter to a biasing force which is greater than the displacement resistance of the marker but less than the driving force of the conveying truck (10).

2. Apparatus according to claim 1, in which the conveying truck has at least two markers arranged one above the other in the direction of travel, characterised in that it has an engaging abutment (50) for each marker (44).

3. Apparatus according to claim 1, characterised in that a roller (54) is provided on the engaging abutment (50), the radius (r) of said roller being less than the height (h) of the marker (44).

4. Apparatus according to claim 1, characterised in that the engaging abutment (68) is in the form of a spring (70).

5. Apparatus according to claim 1, characterised in that the engaging abutment (50) is mounted on a resilient mounting (56, 58) which preferably points in the direction of travel.

6. Apparatus according to claim 1, characterised in that the positioning device (52, 75) comprises an electromagnet (64, 74) which is inactive in the retracted position of the engaging abutment (50, 68).

7. Apparatus according to claim 1, characterised in that it has a positioning device (52) common to all the engaging abutments (50).

8. Use of the apparatus according to claim 1 in a conveying system having at least one switch point (2) with an inward (4), outward (6) and connecting track section (8), the switch point (2) having a code reading apparatus (14) connected to its control mechanism (80), for reading the code on the conveying truck (10), the control apparatus (80) causing the conveying truck to be transferred to the connecting track section (8), as a function of the code setup, but preventing it from doing so if the connecting track section (8) is occupied or disconnected, characterised in that the apparatus (20, 20a) is connected to the output side of the code reading apparatus (14) and is connected to the switch point control device (80) until a busy signalling device (26c) and/or a disconnecting device (79) of the connecting track section (8) so that a busy signal from the busy signalling device (26c) or a disconnected signal from the disconnecting device (79) switches off the code reading device (14) and/or the switch point control device (80) and switches on the apparatus (20, 20a).

9. Use according to claim 8, characterised in that the apparatus (20) has a first circuit (78) with a first relay (82) which is connected to the busy signalling device (26c) at the connecting track section (8) and/or to the disconnecting device (79) and is activated by a busy signal, the first relay (82) having a first switch (86) which controls a second circuit (88) connected to the code reading device (14) and controls a second relay (94), the first relay (82) further comprising a second switch (90) whilst the second relay (94) comprises a third switch (96), said second and third switches (90, 96) controlling a third circuit (92) which is connected to the busy signalling device (26b) for the regions of the switch point (2) and the code resetting apparatus (20) and which comprises the positioning device (52) for the engaging abutment (50), whilst in addition, after the third switch (96) and before the second relay (94), there is a transverse connection (98) between the second and third circuits (88, 92).

10. Use according to claim 9, characterised in that the apparatus (20) in the first circuit has a timing member (84) which regulates the response time of the first relay (82).

## Revendications

1. Dispositif de rappel d'au moins une marque de réglage (44) dans sa position finale, marque disposée sur un chariot de manutention d'une installation de manutention se déplaçant sur une voie, la marque de réglage (44) étant susceptible d'être déplacée dans le sens du déplacement en plusieurs positions servant de code, avec au moins une butée d'entraînement (50, 58) reliée à un dispositif de réglage (52, 75) déplaçable et agissant, à l'état déplacé, dans la trajectoire de déplacement de la marque de réglage (44), caractérisé en ce que chaque butée d'entraînement (50, 68) est déplaçable soit transversalement au sens du déplacement, soit transversalement et dans le sens du déplacement, contre une force de précontrainte supérieure à la résistance au déplacement de la marque de réglage mais toutefois inférieure à la force d'entraînement du chariot de manutention (10).

2. Dispositif selon la revendication 1, dans lequel le chariot de manutention présente au moins deux marques de réglage disposées l'une au-dessus de l'autre dans le sens de déplacement, caractérisé en ce qu'il présente une butée d'entraînement (50) pour chaque marque de réglage (44).

3. Dispositif selon la revendication 1, caractérisé en ce qu'un galet de roulement (54) dont le rayon (r) est inférieur à la hauteur (h) de la marque de réglage (44) est disposé sur la butée d'entraînement (50).

4. Dispositif selon la revendication 1, caractérisé en ce que la butée d'entraînement (68) est réalisée sous la forme d'un ressort (70).

5. Dispositif selon la revendication 1, caractérisé en ce que la butée d'entraînement (50) est disposée sur un support élastique (56, 58), tourné de préférence dans le sens du déplacement.

6. Dispositif selon la revendication 1, caractérisé en ce que le dispositif de réglage (52, 75) présente un électro-aimant (64, 74) qui est inactif lorsque la butée d'entraînement (50, 68) est en position enfoncée.

7. Dispositif selon la revendication 1, caractérisé en ce qu'il présente un dispositif de réglage (52) commun à toutes les butées d'entraînement (50).

8. Utilisation du dispositif selon la revendication 1 sur une installation de manutention comprenant au moins un aiguillage (2) avec un tronçon de rail d'arrivée (4), un tronçon de rail de départ (6) et un tronçon de rail de raccordement (8), l'aiguillage (2) présentant un dispositif de lecture de code (14) pour le code placé sur le chariot de manutention (10) et qui est relié à son dispositif de commande (80), ce dispositif de commande (80) déclenchant en fonction d'un code établi le passage du chariot de manutention sur le tronçon de rail de raccordement (8), mais empêchant toutefois le passage lorsque le tronçon de rail de raccordement (8) est occupé ou hors service, caractérisée en ce que le dispositif (20, 20a) est monté en aval du dispositif de lecture de code (14) et relié à un dispositif de commande d'aiguillage (80) ainsi qu'à un dispositif d'information d'occupation (26c) et/ou d'un dispositif de mise hors service (79) du tronçon de rail de raccordement (8), de sorte qu'un signal d'information d'occupation donné par le dispositif d'information d'occupation (26c) ou un signal de mise hors service donnée par le dispositif de mise hors service (79) met hors service le dispositif de lecture de code (14) et/ou le dispositif de commande d'aiguillage (80) et met en service le dispositif (20, 20a).

9. Utilisation selon la revendication 8, caractérisée en ce que le dispositif (20) présente un premier circuit électrique (78) avec un relais (82) relié au dispositif d'information d'occupation (26c) situé sur le tronçon de rail de raccordement (8) et/ou relié au dispositif de mise hors service (79), et relais activé par un signal d'occupation, le premier relais (82) présentant un premier interrupteur (86) commandant un deuxième circuit électrique (88) relié au dispositif de lecture de code (14) et commandant un deuxième relais (94), le premier relais (82) présentant, en outre, un deuxième interrupteur (90) et le deuxième relais (94) présentant un troisième interrupteur (96), ceux-ci commandant un troisième circuit électrique (92) relié au dispositif d'information d'occupation (26b) des zones de l'aiguillage (2) et au dispositif de rappel de code (20) et présentant le dispositif de réglage (52) destiné à la butée d'entraînement (50), une liaison transversale (98) entre le deuxième et le troisième circuit électrique (88, 92) étant placée après le troisième interrupteur (96) et avant le deuxième relais (94).

10. Utilisation selon la revendication 9, caractérisée en ce que le dispositif (20) présente dans le premier circuit électrique un organe temporisé (84) réglant le temps de réaction du premier relais (82).

Fig. 1

Fig. 2

Fig. 4

Fig. 5

Fig. 3

Fig. 7

Fig. 6.